# EUROPEAN PATENT APPLICATION

(11) **EP 2 413 303 A1**
(43) Date of publication of application: **01.02.2012**
(21) Application number: 09842211.6
(22) Date of filing: 24.03.2009
(51) Int. Cl.: G08G 1/0969, G01C 21/00, G08B 29/00, G08G 1/005, G09B 29/10

(54) **ROUTE GUIDING SYSTEM, ROUTE GUIDING SERVER, AND ROUTE GUIDING METHOD**

(71) Applicant: Navitime Japan Co., Ltd., Tokyo 107-0062 (JP)
(72) Inventor: NAKASHIMA, Shinji, Tokyo 107-0062 (JP)
(74) Representative: HOFFMANN EITLE
(86) International application number: PCT/JP2009/055851
(87) International publication number: WO 2010/109597

(57) **Abstract**

In a route guiding system equipped with a route guiding server (30) and terminal devices (20), a reference point is set as a base point in a travel direction to guide a moving body in a direction that should be taken on route, the direction the moving body should take from the aforementioned reference point is determined based on information relating to the aforementioned route, a specific target object is selected from among target objects used to specify the direction to be taken by the moving body that is near the aforementioned reference point, attribute information relating to the selected target object is obtained, and the travel direction from the aforementioned determined reference point is specified for the moving body based on the attribute information obtained, in order to guide the moving body in the direction that should be taken on the route.

## Description

### TECHNICAL FIELD

The present invention relates to a route guiding system for receiving map data and a guidance route from any desired departure place to a destination, and for guiding a moving body; and in particular relates to a route guiding system, a route guiding server, and a route guiding method whereby a pedestrian can objectively grasp a direction that should be taken along a guidance route.

### BACKGROUND ART

Typically, in pedestrian navigation devices using map data to provide guidance along a route leading to a destination, it is known practice to appropriately lead a pedestrian from a departure place to a destination by displaying landmarks, which are features such as buildings and physical objects that serve as waymarks, on a map.

As one technique for carrying out navigation using a map displaying such landmarks, for example, Patent Document 1 below (Japanese Laid-open Patent Application 2002-181561) discloses a "Navigation Method, Apparatus for the Same, Method for Creating Data for Pictorial Map, and Apparatus for the Same." Patent Document 1 discloses a configuration for carrying out navigation by displaying an acquired current position on a pictorial map on which landmarks are displayed.

[Patent Document 1] Japanese Laid-open Patent Application 2002-181561 (paragraphs [0026]-[0032], FIG. 5, FIG. 6)

### DISCLOSURE OF THE INVENTION

### [Problems the Invention Is Intended to Solve]

However, even where landmarks serving as waymarks are displayed on a pictorial map as disclosed in the aforedescribed Patent Citation 1, a landmark may not always be easy to find, creating the problem that it may take considerable time to find the landmark, making it difficult for a pedestrian to instantaneously decide which direction to take. Further, even if a landmark can be verified, a problem is that in some cases it may be difficult to grasp the direction indicated by the guidance route in relation to the landmark.

As a result of various studies intended to resolve the problems described above, the inventors perfected the present invention by envisioning that the problems described above could be resolved by guiding a pedestrian in a direction that should be taken along a route, through a relative positional relationship with respect to the vehicle travel direction on a street near the route.

Specifically, an object of the present invention is to resolve the problems described above, and to provide a route guiding system, a route guiding server, and a route guiding method whereby a pedestrian can instantaneously decide and can objectively grasp which direction should be taken.

### [Means for Resolving These Problems]

To resolve the problems previously described, the route guiding system of the present invention is a route guiding system provided with a route guiding server and a terminal device, the route guiding server being adapted to distribute to the terminal device guidance information in a pre-established route, and the terminal device being adapted to provide the received guidance information to a moving body that moves, wherein the system is characterized by comprising:
reference point establishing means for establishing a reference point as a base point of a travel direction for guidance in a direction to be taken by the moving body on the route;
travel direction determining means for determining a direction to be taken by the moving body from the reference point, on the basis of information relating to the route;
target object selecting means for selecting a predetermined target object from among target objects defining a travel direction of the moving body near said reference point;
attribute information acquiring means for acquiring attribute information relating to a target object selected by the target object selecting means; and
travel direction guiding means for guiding the moving body in a travel direction from the reference point, which direction being determined by the travel direction determining means and defined on the basis of the attribute information acquired by the attribute information acquiring means, during guidance in a direction to be taken by the moving body on the route.

An aspect of the route guiding system of the present invention is **characterized in that** the target object is a street; the attribute information is information relating to the classification of the street and the vehicle travel direction; and during guidance in a direction to be taken by the moving body on a route, the travel direction guiding means guides the moving body in a travel direction from the reference point, which direction is defined by a relative direction with respect to the vehicle travel direction on the street.

Another aspect of the route guiding system of the present invention is **characterized in that** the attribute information includes information indicating whether the vehicle is of a single-lane or multiple-lane type; and information indicating whether two-direction traffic is possible as directions of vehicle travel.

Another aspect of the route guiding system of the present invention is **characterized in that** the travel direction guiding means employs text for guidance in the vehicle travel direction, and in a travel direction of the moving body defined by a relative positional relationship with respect to the vehicle travel direction.

Another aspect of the route guiding system of the present invention is **characterized in that** the travel direction guiding means employs arrows for guidance in the vehicle travel direction, and in a travel direction of the moving body defined by a relative positional relationship with respect to the vehicle travel direction.

Another aspect of the route guiding system of the present invention is **characterized in that** the travel direction guiding means employs audio for guidance in the vehicle travel direction, and in a travel direction of the moving body defined by a relative positional relationship with respect to the vehicle travel direction.

Another aspect of the route guiding system of the present invention is **characterized in that** the direction to be taken by the moving body is a direction defined on the basis of a result of a route search.

Another aspect of the route guiding system of the present invention is **characterized in that** a direction to be taken by the moving body can be arbitrarily established.

Another aspect of the route guiding system of the present invention is **characterized in that** the reference point is a point having exit spot information established for a facility exit on the route.

Another aspect of the route guiding system of the present invention is **characterized in that** the reference point is a point decided to be where a predetermined area on the route is left.

Another aspect of the route guiding system of the present invention is **characterized in that** the reference point is a current position acquired by positioning means.

Another aspect of the route guiding system of the present invention is **characterized in that** the reference point is a position arbitrarily established on a route.

The route guiding server invention of the present invention is a route guiding server in a route guiding system provided with a route guiding server for distributing guidance information in a pre-established route, and a terminal device connected to the route guiding server via a network, and adapted for providing the received guidance information to a moving body that moves, wherein the server is characterized by comprising:
reference point establishing means for establishing a reference point as a base point of a travel direction for guidance in a direction to be taken by the moving body on the route;
travel direction determining means for determining a direction to be taken by the moving body from the reference point, on the basis of information relating to the route;
target object selecting means for selecting a predetermined target object from among target objects defining a travel direction of the moving body near said reference point;
attribute information acquiring means for acquiring attribute information relating to a target object selected by the target object selecting means; and
travel direction guiding means for guiding the moving body in a travel direction from the reference point, which direction being determined by the travel direction determining means and defined on the basis of the attribute information acquired by the attribute information acquiring means, during guidance in a direction to be taken by the moving body on the route.

An aspect of the route guiding server of the present invention is **characterized in that** the target object is a street; the attribute information is information relating to the classification of the street and the vehicle travel direction; and
during guidance in a direction to be taken by the moving body on a route, the travel direction guiding means guides the moving body in a travel direction from the reference point, defined by a relative direction with respect to the vehicle travel direction on the street.

Another aspect of the route guiding server of the present invention is **characterized in that** the attribute information includes information indicating whether the vehicle is of a single-lane or multiple-lane type; and information indicating whether two-direction traffic is possible as directions of vehicle travel.

Another aspect of the route guiding server of the present invention is **characterized in that** the travel direction determining means employs text for guidance in the vehicle travel direction, and in a travel direction of the moving body defined by a relative positional relationship with respect to the vehicle travel direction.

Another aspect of the route guiding server of the present invention is **characterized in that** the travel direction determining means employs arrows for guidance in the vehicle travel direction, and in a travel direction of the moving body defined by a relative positional relationship with respect to the vehicle travel direction.

Another aspect of the route guiding server of the present invention is **characterized in that** the travel direction determining means employs audio for guidance in the vehicle travel direction, and in a travel direction of the moving body defined by a relative positional relationship with respect to the vehicle travel direction.

Another aspect of the route guiding server of the present invention is **characterized in that** the direction to be taken by the moving body is a direction defined on the basis of a result of a route search.

Another aspect of the route guiding server of the present invention is **characterized in that** a direction to be taken by the moving body can be arbitrarily established.

Another aspect of the route guiding server of the present invention is **characterized in that** the reference point is a point having exit spot information established for a facility exit on the route.

Another aspect of the route guiding server of the present invention is **characterized in that** the reference point is a point decided to be where a predetermined area on the route is left.

Another aspect of the route guiding server of the present invention is **characterized in that** the reference point is a current position acquired by positioning means.

Another aspect of the route guiding server of the present invention is **characterized in that** the reference point is a position arbitrarily established on a route.

The invention of a route guiding method of the present invention is a route guiding method in a route guiding system provided with a route guiding server for distributing guidance information in a pre-established route, and a terminal device connected to the route guiding server via a network, for providing the received guidance information to a moving body that moves, wherein the method is characterized by comprising:
establishing a reference point as a base point of a travel direction for guidance in a direction to be taken by the moving body on the route;
determining a direction to be taken by the moving body from the reference point, on the basis of information relating to the route;
selecting a predetermined target object from among target objects defining a travel direction of the moving body near said reference point;
acquiring attribute information relating to a selected target object; and
guiding the moving body in a determined travel direction from the reference point, which direction is specified on the basis of acquired attribute information, during guidance in a direction to be taken by the moving body on the route.

An aspect of the route guiding method of the present invention is **characterized in that** the target object is a street; the attribute information is information relating to the classification of the street and the vehicle travel direction; and
during guidance in a direction to be taken by the moving body on a route, the travel direction guiding means guides the moving body in a travel direction from the reference point, which travel direction being defined by a relative direction with respect to the vehicle travel direction on the street.

Another aspect of the route guiding method of the present invention is **characterized in that** the attribute information includes information indicating whether the vehicle is of a single-lane or multiple-lane type; and information indicating whether two-direction traffic is possible as directions of vehicle travel.

Another aspect of the route guiding method of the present invention is **characterized in that** during guidance of travel direction, text is employed for guidance in the vehicle travel direction, and in a travel direction of the moving body defined by a relative positional relationship with respect to the vehicle travel direction.

Another aspect of the route guiding method of the present invention is **characterized in that** during guidance of travel direction, arrows are employed for guidance in the vehicle travel direction, and in a travel direction of the moving body defined by a relative positional relationship with respect to the vehicle travel direction.

Another aspect of the route guiding method of the present invention is **characterized in that** during guidance of travel direction, audio is employed for guidance in the vehicle travel direction, and in a travel direction of the moving body defined by a relative positional relationship with respect to the vehicle travel direction.

Another aspect of the route guiding method of the present invention is **characterized in that** the direction to be taken by the moving body is a direction defined on the basis of a result of a route search.

Another aspect of the route guiding method of the present invention is **characterized in that** a direction to be taken by the moving body can be arbitrarily established.

Another aspect of the route guiding method of the present invention is **characterized in that** the reference point is a point having exit spot information established for a facility exit on the route.

Another aspect of the route guiding method of the present invention is **characterized in that** the reference point is a point decided to be where a predetermined area on the route is left.

Another aspect of the route guiding method of the present invention is **characterized in that** the reference point is a current position acquired by positioning means.

Another aspect of the route guiding method of the present invention is **characterized in that** the reference point is a position arbitrarily established on a route.

### [Effect of the Invention]

According to the route guiding system of the present invention, during guidance in a direction to be taken by a moving body on a route, attribute information regarding target objects for specifying a travel direction of the moving body which is near the route can be acquired, and the moving body can be guided in the direction to be taken based on the acquired attribute information. Because of this, the direction to be taken by the moving body along the route can be grasped intuitively, and incorrect route selection can be prevented.

According to a mode of the route guiding system of the present invention, during guidance of a moving body in a direction to be taken on a route, attribute information, i.e., the classification of a street near the route and the vehicle travel direction thereon, can be acquired, and the moving body can be guided by a relative direction with respect to the vehicle travel direction, in the direction that should be taken based on the acquired attribute information. Because of this, the direction to be taken by the moving body along the route can be grasped intuitively, and incorrect route selection can be prevented.

According to another mode of the route guiding system of the present invention, the attribute information includes vehicle classification information indicating either single-lane or multiple-lane, and information indicating whether two-direction traffic is possible as directions of vehicle travel. Because of this, in cases where a street near the route is a single-lane street with vehicle traffic from both directions, since the moving body cannot be guided in the direction that should be taken in terms of a relative direction with respect to the vehicle travel direction, guidance need not be carried out in such cases, whereby incorrect route selection can be prevented further.

According to other modes of the route guiding system of the present invention, during guidance in a direction to be taken by a moving body on a route, text, arrows, audio, or the like can be employed to guide the moving body in the vehicle travel direction, and in a travel direction that is defined by a relative positional relationship with respect to the vehicle travel direction. Because of this, the direction to be taken by the moving body along the route can be grasped more intuitively, and incorrect route selection can be prevented.

According to another mode of the route guiding system of the present invention, the direction to be taken by a moving body is a direction defined on the basis of a result of a route search. Because of this, the direction to be taken by the moving body along a route obtained by a route search can be grasped intuitively, and incorrect route selection can be prevented.

According to another mode of the route guiding system of the present invention, it is possible to arbitrarily establish a direction to be taken by the moving body. Because of this, the direction to be taken by the moving body along an arbitrarily established route can be grasped intuitively, and incorrect route selection can be prevented.

According to another mode of the route guiding system of the present invention, the reference point is a point having exit spot information that has been established for a facility exit on the route. Because of this, when the moving body reaches a facility exit point on a route having exit spot information, the moving body is guided in the direction to be taken from that point on the basis of a target object specifying a travel direction for the moving body that is near the facility exit, and therefore the direction to be taken along a route can be grasped intuitively even if the facility exit is unfamiliar, and incorrect route selection can be prevented.

According to another mode of the route guiding system of the present invention, the reference point is a point decided to be where a predetermined area on the route is left. Because of this, when the moving body leaves a predetermined area, the moving body is guided from that point in the direction to be taken on the basis of a target object for specifying a travel direction of the moving body that is near the point of leaving, and therefore the direction to be taken along a route can be grasped intuitively even when leaving an unfamiliar predetermined area, and incorrect route selection can be prevented.

According to another mode of the route guiding system of the present invention, the reference point is a current position acquired by positioning means. Because of this, the direction to be taken by the moving body along a route leading from the current position to a destination can be grasped intuitively, and incorrect route selection can be prevented.

According to another mode of the route guiding system of the present invention, the reference point is a position arbitrarily established on a route. Because of this, the direction to be taken by the moving body along a route leading from an arbitrarily established position to a destination can be grasped intuitively, and incorrect route selection can be prevented.

The route guiding server of the present invention can provide a route guiding server capable of affording the effects of the aforedescribed route guiding system invention. The route guidance method of the present invention is capable of affording effects comparable to the aforedescribed route guiding system invention.

### BRIEF DESCRIPTION OF THE DRAWINGS

FIG. 1 is a system configuration diagram depicting the configuration of a route guiding system according to the present invention;
FIG. 2 is an example of a schematic drawing for describing an outline of route guidance of the present invention;
FIG. 3 is another example of a schematic drawing for describing an outline of route guidance of the present invention;
FIG. 4 is a block diagram depicting the detailed configuration of a route guiding system according to a first embodiment of the present invention;
FIG. 5 is a drawing depicting a display screen for guidance information received by a terminal device according to a first embodiment of the present invention, wherein FIG. 5(A) depicts an example of a screen displaying guidance information on a detailed map, and FIG. 5(B) depicts an example of a screen displaying guidance information on a wide area map;
FIG. 6 is a flowchart depicting the operation sequence of a route guiding server according to a first embodiment of the present invention;
FIG. 7 is a flowchart depicting the operation sequence of the guidance process of Step S16 depicted in FIG. 6, described in detail; and
FIG. 8 is a block configuration diagram depicting the detailed configuration of a route guiding system according to a second embodiment of the present invention.

### [Key to Symbols]

- 10, 10': Route guiding system
- 20: Terminal device
- 21, 31: Control means
- 22, 32: Communication means
- 23: Positioning means
- 24: Display means
- 25: Distribution data storage means
- 26: Distribution request editing means
- 27: Operational input means
- 28: Audio output means
- 29: Output control means
- 30, 30': Route guiding server
- 33: Route searching means
- 34: Distribution data editing means
- 35, 35': Pedestrian travel direction guiding means
- 35a: Reference point establishing means
- 35b: Travel direction acquiring means
- 35c: Nearest street selecting means
- 35d: Attribute information acquiring means
- 35e: Nearest waterway selecting means
- 35f: Passage route selecting means
- 36: Map database
- 37: Network database for route searching
- 37a: Pedestrian road network data
- 37b: Automobile road network data
- 37c: Transportation network data
- 38: POI database
- 39: Natural feature database
- 50: POI information distribution server
- 51: Information distribution server

### BEST MODE FOR CARRYING OUT THE INVENTION

The present invention is described in detail hereinbelow using specific embodiments and drawings. The embodiments hereinbelow are intended to present examples of a route guiding system for specifying the technological concepts of the present invention and are not intended to limit the present invention to this route guiding system, and are equally applicable to other embodiments of a route guiding system included within the scope of the claims.

### [First Embodiment]

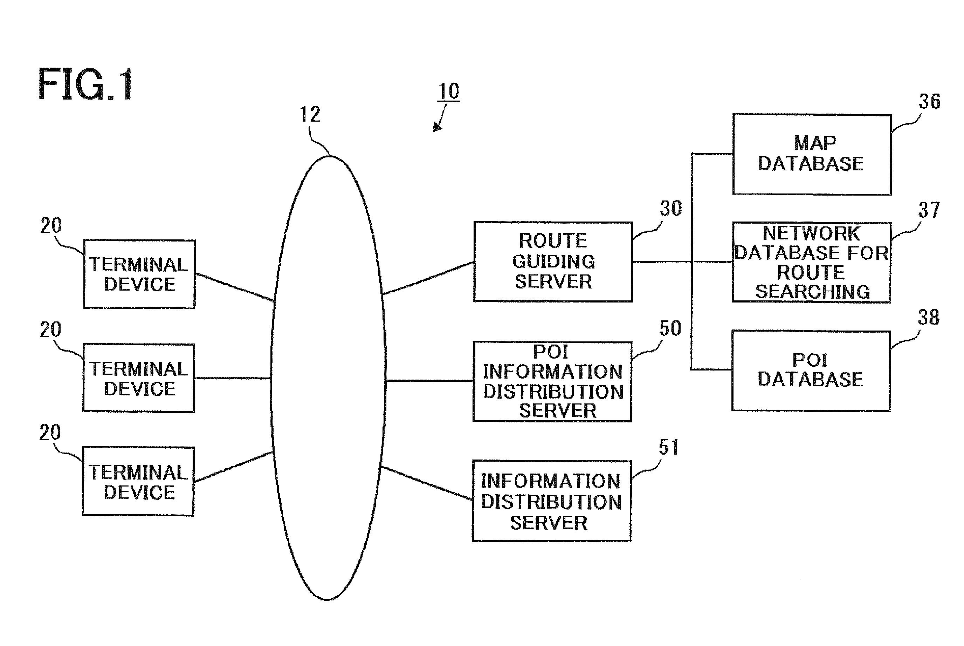

FIG. 1 is a system configuration diagram depicting the configuration of a route guiding system 10 according to the present invention. As depicted in FIG. 1, the route guiding system 10 is provided with terminal devices 20 connected via a network 12, and a route guiding server 30. The route guiding server 30 of this route guiding system 10 has map data covering an area for which route search and route guidance services are provided, route search network data, and POI (Point of Interest) data.

In response to a POI lookup request from a terminal device 20, the route guiding server 30 depicted in FIG. 1 looks up and distributes desired POI information from a POI database 38 for storing POI data such as POI location information. In the event of an acquisition request from a terminal device 20 for a desired point or for map data relating to POI lookup, making reference to a map database 36, the map data in question is read out and distributed to the terminal device 20. In the event of a route search request from a terminal device 20, the route guiding server 30 performs a route search with reference to a network database for route searching 37. Guidance route data of an optimum route or of candidate routes obtained as a result of the route search is then distributed to the terminal device 20.

The map database 36 stores unit map data of mesh form demarcated into predetermined ranges of latitude and longitude, this map data being composed of vector data which has been divided into various levels, namely, wide area maps, medium area maps, detail maps, and street-level maps. The route guiding server 30 reads out map data requested by a terminal device 20 from the map database 36 and distributes the data to the requesting terminal device 20. Typically, the distributed map data is equivalent to nine unit maps, centered on the current position of the terminal device 20 and corresponding to meshes in the top, bottom, left, right, and diagonal directions.

The network database for route searching 37 is provided with road network data for searching for pedestrian or automobile routes; and transportation network data for searching for routes using transportation systems such as railways, aircraft, boats, buses, and so on. The road network data is preferably divided into roads for pedestrian use and roads for automobile use, and is represented by links connecting nodes, the nodes being intersection points and nodal points of the respective roads, with predetermined times required when traveling at standard speeds being associated with each link by way of a cost of the link.

The transportation network data, with railway stations, airports, and harbors of lines of transportation systems as nodes, is composed of data represented by links connecting the nodes, with the respective links being composed of individual trains, aircraft, boats, buses, or other transportation means, and with node departure times and node arrival times associated therewith based on operation time schedules.

In the terminal devices 20, route search conditions are established which specify departure places, destinations, movement means (walking, automobile, transportation systems, and the like), departure times, and other time conditions, and when a route search request comes to the route guiding server 30, the route guiding server 30 refers to the network data of the network database for route searching 37 and searches for an optimum route or a plurality of candidate routes conforming to the route search conditions from the departure place to the destination, and then responds to the terminal devices 20 with information on the routes. When a route is selected and a route guidance request is issued in a terminal device 20, map data, data on the selected route, and guidance data for providing guidance along the route are distributed to the terminal device 20.

The configuration of the route guiding system 10 is further provided with a POI information distribution server 50 for providing detailed information such as POI locations and service descriptions belonging to various categories; various other information distribution servers 51 for providing content such as music and various images as well as other information, and the like. Because of this, the route guiding server 30 can acquire needed data from the POI information distribution server 50 and the other information distribution servers 51 via the network 12 and can add the data to its own database. The route guiding server 30 can also similarly transmit a lookup request to the POI information distribution server 50 or to the other information distribution servers 51 and acquire the desired lookup results.

The present embodiment assumes that automobile road network data for searching for automobile routes provided in the network database for route searching 37 includes attribute information such as the number of lanes of streets, and whether streets are one-direction or two-direction; and during guidance in a travel direction of a route to be walked, the route guiding server 30 acquires attribute information for the nearest street on the route, and in a case where, on the basis of the acquired attribute information, the street in question is designated as a guidance target for guiding a pedestrian in a direction to be taken, guides the pedestrian in the direction to be taken with respect to the lane travel direction.

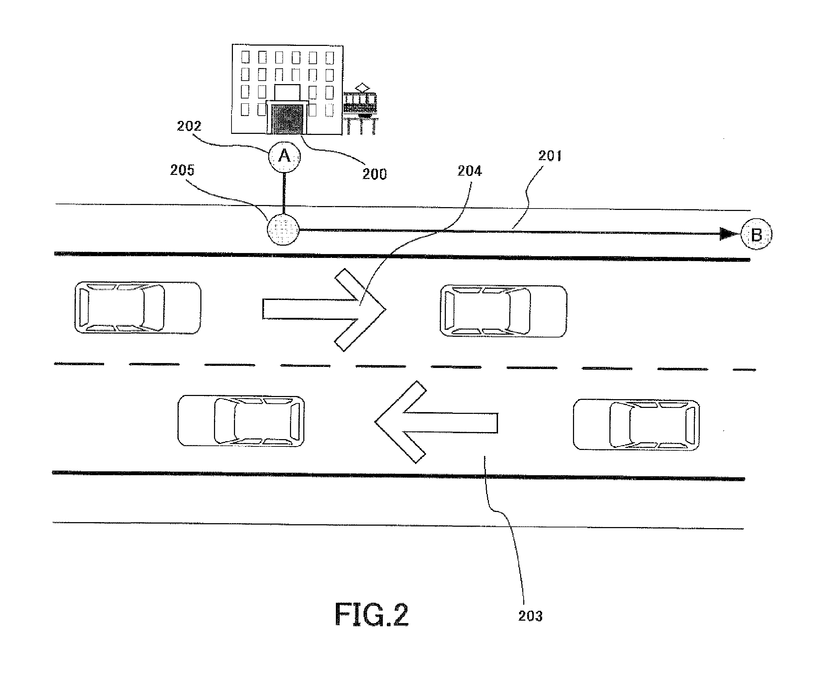

FIG. 2 is an example of a schematic drawing for describing an outline of route guidance of the present invention by such a route guiding server. Utilizing pedestrian road network data provided in the network database for route searching 37, the route guiding server 30 carries out a pedestrian route search from point A to point B, and determines a route (guidance route) 201 to be taken by a pedestrian.

The route guiding server 30 then selects a nearest street 203 from a reference point 202 established on the guidance route 201 (e.g., point A) as a target street, and acquires attribute information of the street 203 from automobile road network data provided in the network database for route searching 37.

The information acquired here classifies roads into three types according to the travel direction of automobile and the number of lanes, i.e., one-direction traffic single/multiple lane, two-direction traffic single lane (single-lane two-way traffic), and two-direction traffic multiple lane; and depicts which of these classifications the target street belongs to according to the lane or lanes thereof. The attribute information acquired in FIG. 2 depicts that the street 203 is a two-direction traffic, two-lane road.

Consequently, based on this information, the route guiding server 30 guides the pedestrian in a direction to be taken with respect to the lane travel direction of the nearest target street. Specifically, in FIG. 2 for example, because the direction to be taken by the pedestrian is the same direction with respect to the travel direction in the nearest lane (the flow of cars closest to the guidance route 201) 204 of the target street 203 at a guidance point 205, guidance takes place in the forward direction.

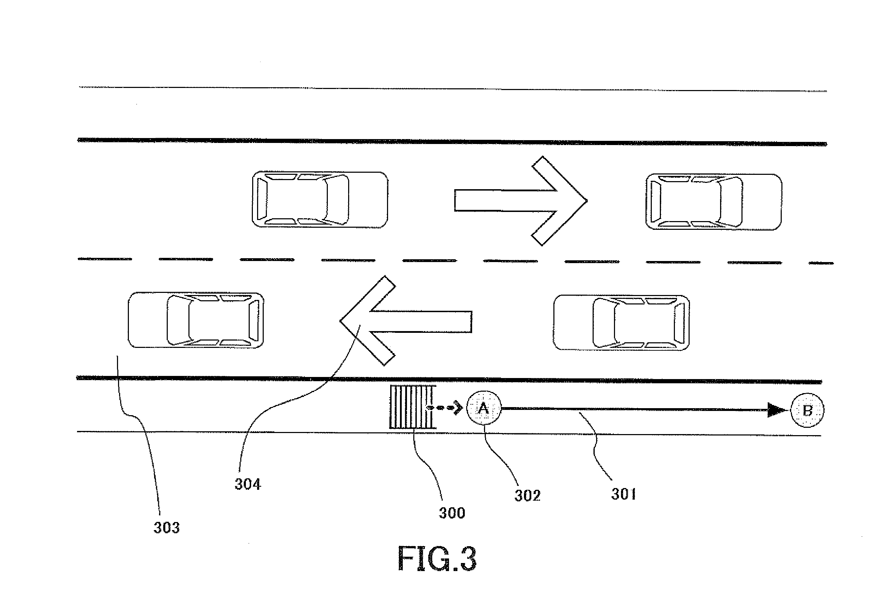

FIG. 3 is another example of a schematic drawing for describing an outline of route guidance of the present invention. The attribute information of a street 303 in FIG. 3, like that in FIG. 2, depicts that it is a two-direction traffic two-lane road;, and because the direction to be taken by the pedestrian is the opposite direction with respect to the travel direction in the nearest lane (the flow of cars closest to the guidance route 301) 304 of the target street 303 at a reference point 302 of emergence from a subway station exit 300, guidance takes place in the reverse direction.

In this way, the direction to be taken first along a guidance route from, for example, a station exit 200 can be grasped intuitively. This is particularly effective in a case of emerging from a subway station exit 300 as depicted in FIG. 3, where it is difficult to orient a guidance route on a map with actual roads, making it difficult to instantaneously decide which direction to take.

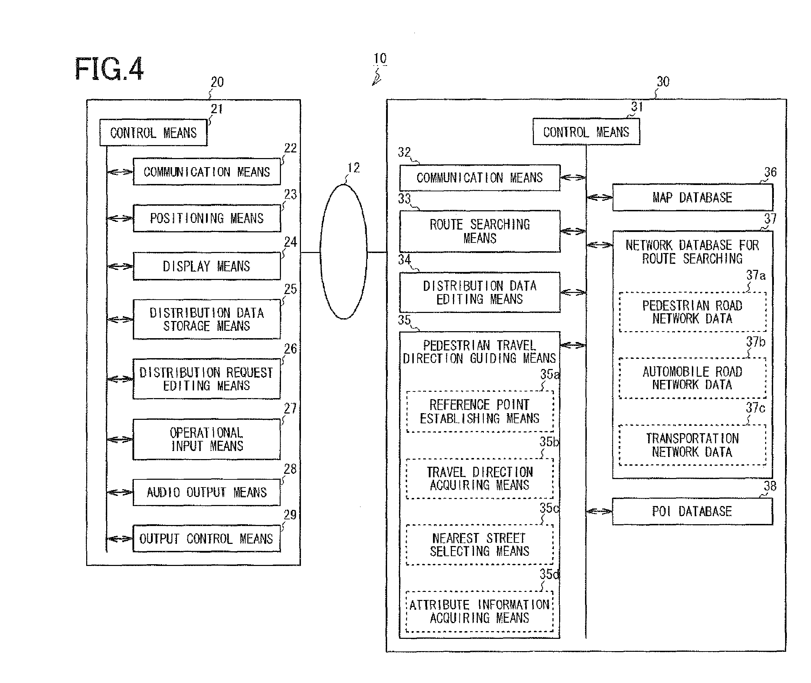

Next, the detailed configuration of the route guiding system according to the present invention is described. FIG. 4 is a block diagram depicting the detailed configuration of the route guiding system according to a first embodiment of the present invention, and depicts the detailed configuration of the route guiding server and a terminal device.

The terminal device 20 is a terminal that is able to receive a navigation service, and a cellular telephone can be used; other options include a PDA, a music player, a portable game device, and other portable devices; or a mobile personal computer (PC). For this reason, the terminal device 20 is provided with control means 21, communication means 22, positioning means 23, display means 24, distribution data storage means 25, distribution request editing means 26, operational input means 27, audio output means 28, output control means 29, and so on.

In the terminal device 20, the control means 21 is a microprocessor having a RAM, ROM, and a processor, not shown, and controls operations of various sections by a control program stored in the ROM. The communication means 22 is an interface for transmitting and receiving communication data to and from the route guiding server 30, etc., via the network 12.

The positioning means 23 receives signals from GPS satellites, and acquires position information by satellite navigation means for latitudinal and longitudinal positioning to arrive at the current position of the terminal device 20. In a terminal device not provided with such a GPS function (e.g., a cellular telephone), position information of a communications area may be acquired through position registration with a base station, with the route guiding server 30 receiving this position information from the terminal device to discern the position thereof. The acquired position information is transmitted to the route guiding server 30, and can be utilized during lookup of map data, or during identification of current position together with display of map data.

The display means 24 is composed of a liquid crystal display unit or the like, and carries out display of maps and guidance routes distributed by the route guiding server 30. The display means 24 also displays a menu screen for the purpose of operating the terminal device 20, and lookup conditions or route search conditions can be established through operation of icons, pull-down menus, or the like. Consequently, the display means 24 also functions as part of the operational input means 27.

The distribution data storage means 25 temporarily saves various kinds of data transmitted from the route guiding server 30, such as map data or route guidance data. Data stored by the distribution data storage means 25 is read out as needed, and displayed by the display means 24.

The distribution request editing means 26 edits distribution requests for transmission to the route guiding server 30 based on various lookup conditions or route search conditions established through operations of the operational input means 27 or of menu screens displayed on the display means 24, and transmits the requests to the route guiding server 30 via the communication means 22. Distribution requests for map data are also transmitted to the route guiding server 30 in cases where map data is insufficient for the purpose of scrolling a map displayed by the display means 24 to be scrolled, or of displaying the map on the display means 24 when the terminal device 20 moves.

The operational input means 27 is adapted for operation and input of numeric keys, alphabet keys, other function keys, selection keys, scroll keys (the up, down, left, and right arrow keys), etc., and carries out various input operations through key operations of selection of desired menus from a menu screen displayed on the output means, i.e., the display means 24. The operational input means 27 corresponds to the input means disclosed in the claims. The audio output means 28 outputs audio relating to guidance information received from the route guiding server 30.

The output control means 29 is provided with graphics memory such as VRAM, not shown, for expanding images to be displayed by the display means 24; and carries out control to display map images and guidance route images based on map data and route guidance data stored by the distribution data storage means 25 during route guidance operations. The output control means 29 also carries out control to output audio messages via the audio output means 28, for guidance information received from the route guiding server 30.

Meanwhile, as depicted in FIG. 4, the route guiding server 30 is provided with control means 31, communication means 32, route searching means 33, distribution data editing means 34, pedestrian travel direction guiding means 35, and so on. As described previously, the route guiding server 30 is further provided with a map database 36 for storing map data; a network database for route searching 37 for storing pedestrian road network data 37a, automobile road network data 37b; and a POI database 38 for storing POI names and position information.

The control means 31 is a microprocessor having a RAM, ROM, and a processor, not shown; and controls operations of various sections by a control program stored in the ROM. The communication means 32 is an interface for communicating with the terminal devices 20 via the network 12.

On the basis of current position information and route search conditions such as the departure place, destination, etc. transmitted from a terminal device 20, the route searching means 33 refers to the network database for route searching 37 and carries out a route search from the departure place to the destination. Either a method known as the label-correcting method or a method known as the Dijkstra method is used as the method of this manner of route search. This configuration is comparable to those of ordinary navigation systems.

The distribution data editing means 34 carries out editing, such as embedding data of routes selected from an optimum route or a plurality of candidate routes found by the searching means 33, in the map data that includes the current position read out from the map database 36. The edited guidance route data (route guidance information) is distributed to the terminal device 20 via the communication means 32.

The pedestrian travel direction guiding means 35 is provided with reference point establishing means 35a, travel direction acquiring means 35b, nearest street selecting means 35c, attribute information acquiring means 35d, etc.

On the basis of a guidance route obtained in a case where a route search has been carried out in advance, the reference point establishing means 35a establishes a point (reference point) serving as a reference for deciding upon a travel direction in which to guide a pedestrian in a direction to be taken from a predetermined position. The method for establishing this reference point involves automatically establishing a reference point which is, for example, a point established at the exit of a facility such as a train station present on the route, or a point decided to be one leaving a predetermined area, such as a park or underground mall. In this case, the decision of leaving the predetermined area is made with reference to departure from a polygon that depicts the area in question.

Alternatively, the user may establish an arbitrary location as the reference point. In this case, a desired point specified by the user on the guidance route, a point acquired as the current position by GPS, or the like is set as the reference point. In a case where the current position is set as the reference point, after this current position has been set as the reference point, it will be necessary to derive a new guidance route by establishing a pedestrian route from the reference point in question to the destination through a route search or the like.

From the guidance route data, the travel direction acquiring means 35b acquires pedestrian travel direction information that depicts a direction to be taken by a pedestrian along the guidance route from the point that was established as the reference point in the above manner. The travel direction acquiring means 35b corresponds to the travel direction determining means disclosed in the claims.

The nearest street selecting means 35c selects the street nearest the established reference point, as a target street from the automobile road network 37b. The nearest street selecting means 35c corresponds to the target object selecting means disclosed in the claims.

From the automobile road network data 37b, the attribute information acquiring means 35d acquires attribute information of the target street that was selected by the nearest street selecting means 35c. As described previously, the attribute information acquired here is composed of information relating to vehicle travel direction, i.e., whether two-direction traffic is possible; and information relating to classification as multiple-lane or single-lane.

As described previously, on the basis of pedestrian travel direction information from the reference point acquired by the travel direction acquiring means 35b and the attribute information of the target street acquired by the attribute information acquiring means 35d, the pedestrian travel direction guiding means 35 guides the pedestrian in a direction to be taken through a relative positional relationship with respect to the vehicle travel direction of the target street. This guidance information is edited by the distribution data editing means 34 into the distribution data (route guidance information) for the terminal device 20, and is distributed to the terminal device 20 by the communication means 32. The pedestrian travel direction guiding means 35 corresponds to the travel direction guiding means disclosed in the claims.

Once the terminal device 20 receives the distribution data including the guidance information (route guidance information), guidance of the pedestrian in the direction to be taken is carried out in the following manner in the terminal device 20. Specifically, the terminal device 20 initially stores the received distribution data in the distribution data storage means 25; and with the pedestrian at a point having exit spot information (e.g., the reference point 202 depicted in FIG. 2) established at a facility exit (e.g., the train station exit 200 depicted in FIG. 2) on the guidance route, a text or audio message (e.g., "Proceed in the direction of traffic flow on the closest street") is output via the display means 24 or the audio output means 28, based on guidance information contained in the distribution data that was read out under control of the output control means 29.

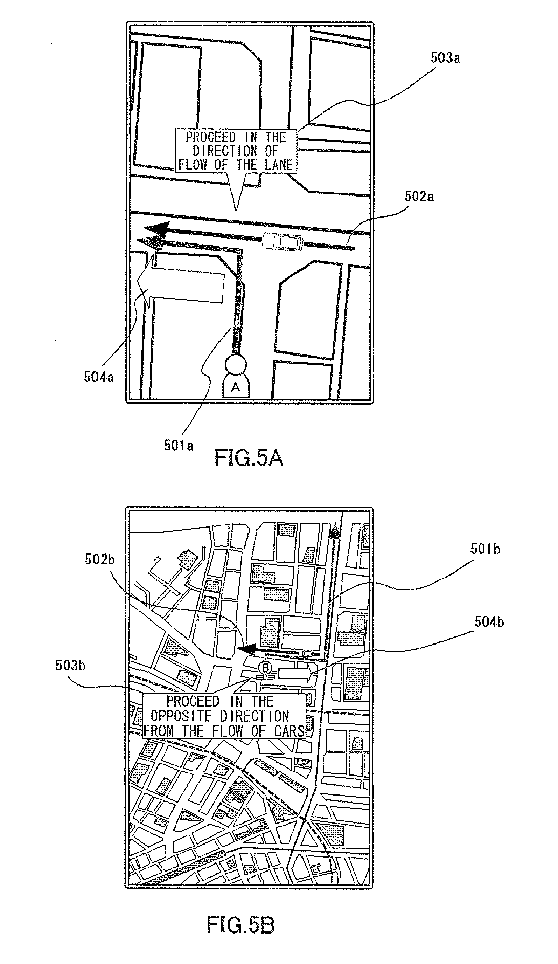

During screen display of guidance information, a display affording a more intuitive grasp may be created with arrows for highlighted display of the lane travel direction of the target lane. FIG. 5 is a drawing depicting a display screen for guidance information received by a terminal device according to the first embodiment of the present invention. In particular, FIG. 5(A) depicts an example of a screen displaying guidance information on a detailed map, and FIG. 5(B) depicts an example of a screen displaying guidance information on a wide area map.

In the detailed map screen depicted in FIG. 5(A), in a case where a point A on a guidance route 501a is established as a reference point in the course of route guidance to a destination, the travel direction of a target lane that is nearest to this reference point A is depicted by a heavy arrow 502a, and the travel direction of the pedestrian is displayed by a text message 503a (e.g., "Proceed in the direction of traffic flow of the lane") or by an arrow 504a.

In the wide area map screen depicted in FIG. 5(B), guidance is carried out automatically through passage by a point B having exit spot information midway along a guidance rout 501b. Once the point B having exit spot information has been automatically established as a reference point, the travel direction of the nearest target lane is depicted by a heavy arrow 502b; and because the travel direction of this target lane is the opposite direction from the direction to be taken by the pedestrian, the travel direction of the pedestrian is displayed by a text message 503b (e.g., "Proceed in the opposite direction of traffic flow of the lane") or by an arrow 504b.

In this way, whereas grasping a guidance route on a wide area map is inherently difficult in many instances, by depicting the flow of the lane with a message or an arrow, the pedestrian can easily decide the direction for the pedestrian to take, without having to display a detailed map like that depicted in FIG. 5(A) on the terminal device.

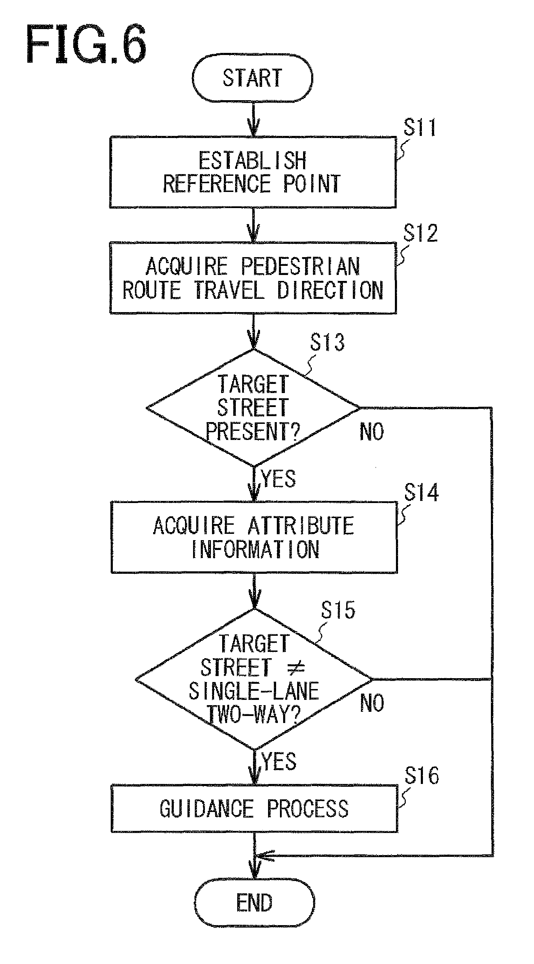

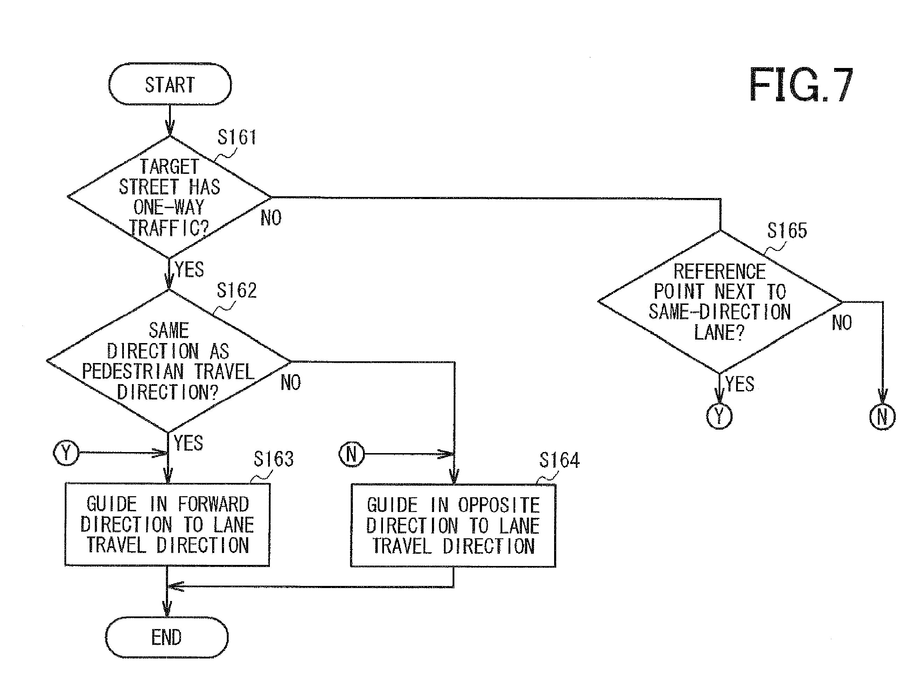

Next, the operation sequence of the route guiding system according to the present embodiment is described in detail with reference to the flowcharts in FIGS. 6 and 7. FIG. 6 is a flowchart depicting the operation sequence of the route guiding server according to the first embodiment of the present invention, and FIG. 7 is a flowchart depicting the operation sequence of the guidance process of Step S16 depicted in FIG. 6, described in detail. The operation sequence depicted in FIGS. 6 and 7 is accomplished by the control means 31 of the route guiding server 30, through execution of a control program stored in the ROM.

First, once a route search request specifying route search conditions, such as departure place and destination, is carried out to the route guiding server 30 through user operation of the operational input means 27, the route searching means 33 of the route guiding server 30 carries out a route search with reference to the network database for route searching 37; and with the distribution editing means 34 creates route guidance information from optimal route (route guidance) data or map data acquired from the map database 36.

Here, in the process of Step S11, acting on the basis of spot information stored in the POI database 38, etc., the reference point establishing means 35a of the route guiding server 30 automatically establishes a reference point which is a point established at the exit of a facility such as a train station present on the route found by the route searching means 33, or a point decided to be one leaving a predetermined area such as a park or underground mall.

Next, in the process of Step S12, from the guidance route data, the travel direction acquiring means 35b acquires pedestrian travel direction information depicting a direction to be taken along the guidance route by the pedestrian possessing the terminal device 20, from a base point which is the reference point that was established in Step S11.

Then, in the process of Step S13, the nearest street selecting means 35c refers to the automobile road network data 37b and assesses whether there is a street within a predetermined range from the reference point that was established in Step S11. In the case where there is a street within a predetermined range from the reference point, the nearest street selecting means 35c selects the nearest street from the reference point as the target street and advances to the process of Step S14, or in the case where there is no street within a predetermined range from the reference point, terminates the guidance process of the present invention.

In the process of Step S14, the attribute information acquiring means 35d refers to the automobile road network 37 data b and acquires attribute information of the target street that was selected by the nearest street selecting means 35c.

Next, in the process of Step S15, on the basis of the attribute information that was acquired in Step S14, the pedestrian travel direction guiding means 35 assesses whether the target street is single-lane two-way traffic (two-direction traffic single lane). In the case where the target street is single-lane two-way traffic (two-direction traffic single lane), because it is impossible to define a travel direction for a pedestrian according to the flow of cars driving on the street, the pedestrian travel direction guiding means 35 terminates the guidance process of the present invention. On the other hand, in the case where the target street is not single-lane two-way traffic (two-direction traffic single lane), advancing to the process of Step S16, the guidance process of the present invention is carried out.

Next, the operation of the guidance process of Step S16 depicted in FIG. 6 is described in detail with reference to FIG. 7.
First, in the process of Step S161, on the basis of the attribute information acquired in Step S14, the pedestrian travel direction guiding means 35 assesses whether the target street is one-direction traffic single/multiple lane. In a case where the target street is one-direction traffic, the pedestrian travel direction guiding means 35 advances to the process of Step S162, or in a case where the target street is not one-direction traffic, advances to the process of Step S165.

Then, in the process of Step S162, on the basis of the pedestrian travel direction information acquired in Step S12, the pedestrian travel direction guiding means 35 assesses whether the lane travel direction of the target street (one-direction traffic lane) is the same direction as the direction to be taken by the pedestrian. In a case where the lane travel direction of the target street is the same as the direction to be taken by the pedestrian, the pedestrian travel direction guiding means 35 advances to the process of Step S163, or in a case where the lane travel direction of the target street is not the same as the direction to be taken by the pedestrian, the pedestrian travel direction guiding means 35 advances to the process of Step S164.

Next, in the process of Step S163, the pedestrian travel direction guiding means 35 guides the pedestrian in the forward direction with respect to the lane travel direction of the target street as the direction to be taken, and terminates the process; or in the process of Step S164, guides the pedestrian in the opposite direction from the lane travel direction of the target street as the direction to be taken, and terminates the process.

In the process of Step S165, on the basis of the pedestrian travel direction information acquired in Step S12 and the attribute information acquired in Step S14, the pedestrian travel direction guiding means 35 assesses whether the reference point that was established in Step S11 lies next to a lane of the same direction as the pedestrian travel direction. In a case where the reference point lies next to a lane of the same direction as the pedestrian travel direction (e.g., the case depicted in FIG. 2), the pedestrian travel direction guiding means 35 advances to the process of Step S163, and guides the pedestrian in the forward direction with respect to the lane travel direction of the target street as the direction to be taken.

On the other hand, in the assessment process of Step S165, in a case where the reference point does not lie next to a lane of the same direction as the pedestrian travel direction (e.g., the case depicted in FIG. 3), the pedestrian travel direction guiding means 35 advances to the process of Step S164, and guides the pedestrian in the opposite direction with respect to the lane travel direction of the target street as the direction to be taken.

In this way, the pedestrian travel direction guiding means 35 creates guidance information at reference points present on a guidance route found by the route searching means 33; and the distribution data editing means 34 creates route guidance information [from] optimum route (guidance route) data and map data acquired from the map database 36, together with the guidance information for these. The route guiding server 30 transmits the created route guidance information to the terminal device 20 with the communication means 32.

Whereas the preceding description described a case in which a route search from a desired departure place to a destination is carried out and an optimum route or travel direction to the destination is determined in advance, and points having spot information present on this route are set as reference points automatically, the present invention is not limited to this arrangement. The present invention may be implemented when carrying out guidance on a route specified arbitrarily by the pedestrian, or in a travel direction specified arbitrarily by the pedestrian, as well. Also, the present invention may be implemented analogously in a case where a current position acquired by GPS or a position specified arbitrarily by the pedestrian is established as a reference point.

Also, whereas the preceding description described a case in which streets near the route are used as target objects for defining a travel direction for a pedestrian, the present invention is not limited to this arrangement. The present invention may be implemented for any moving body (vehicle) having a fixed travel direction, such as railroad lines. In this case, there may be adopted a configuration whereby the transportation network data is provided with attribute information for each railroad line (positions where rail lines are laid, vehicle travel direction, etc.), and the pedestrian travel direction guiding means 35 is provided with nearest railroad selecting means for selecting the railroad nearest from an established reference point as a target railroad.

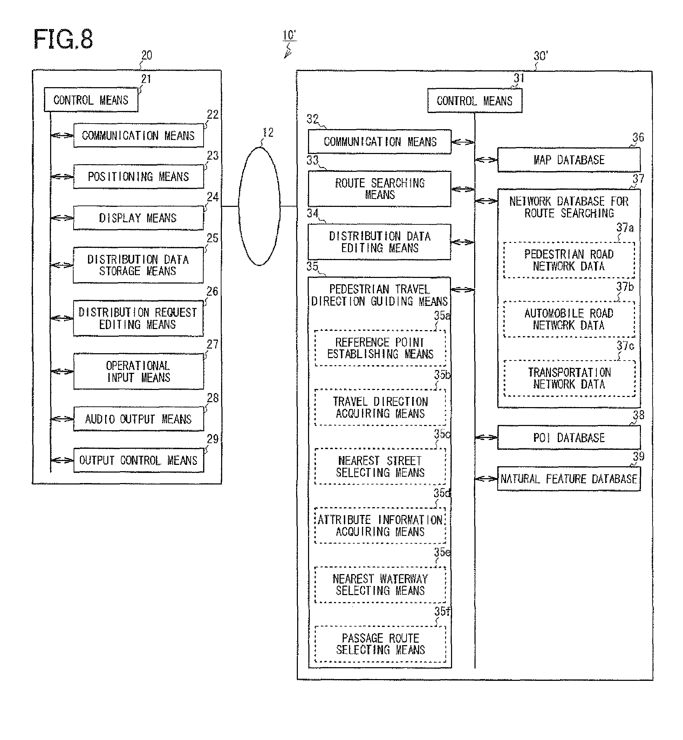

Next, a route guiding system according to a second embodiment of the present invention is described with reference to FIG. 8.

### [Second Embodiment]

The route guiding system 10' according to the second embodiment is provided with terminal devices 20 and a route guiding server 30', interconnected via a network 12. The configuration of the route guiding system 10' of the second embodiment is the same as that of the first embodiment, except that a natural feature database 39 is provided, and the pedestrian travel direction guiding means 35' of the second embodiment is further provided with nearest waterway selecting means 35e and passage route selecting means 35f; therefore, hereinbelow, constitutional elements that are identical in the first and second embodiments are assigned like reference symbols, and descriptions of their respective operations are omitted.

The natural feature database 39 stores natural feature data that saves associations of position (latitude/longitude) and elevation at points of map data. Utilizing the data of such a natural feature database 39, the slope and grade of roads, as well as upstream and downstream of rivers, can be discriminated from the elevation differential between two points on a map displayed on a terminal device 20, and the ascending direction and descending direction of sloping roads, the direction of flow of rivers, and the like can be identified.

The nearest waterway selecting means 35e selects the waterway nearest an established reference point as a target waterway from the map database 36. The passage route selecting means 35f selects a route towards a destination from the established reference point as a target route from the pedestrian road network data 37a.

The attribute information acquiring means 35d of the pedestrian travel direction guiding means 35' then acquires from the natural feature database 39 attribute information of the target waterway that was selected by the nearest waterway selecting means 35e. The attribute information acquired here is information relating to the height differential between two points along the selected waterway, i.e., which direction the waterway is flowing.

The attribute information acquiring means 35d of the pedestrian travel direction guiding means 35' also acquires from the natural feature database 39 attribute information of the target route that was selected by the passage route selecting means 35f. The attribute information acquired here is information relating to the height differential of a route from an established reference point towards a destination, i.e., whether the route is sloping.

Based on the pedestrian travel direction information from the reference point acquired by the travel direction acquiring means 35b, and the attribute information of the target waterway or the attribute information of the target route acquired by the attribute information acquiring means 35d, the pedestrian travel direction guiding means 35' guides the pedestrian in a direction to be taken according to a relative positional relationship to the direction of flow of the target waterway or the ascending or descending state of the target route.

Consequently, if the direction to be taken by the pedestrian lies along the flow of a waterway, the route guiding system 10' of the second embodiment can provide guidance through text or audio messages to the effect of "Proceed in the direction of flow of the river," for example. Or, if the direction to be taken by the pedestrian lies along a downhill route, guidance can be provided through text or audio messages to the effect of "Go down the hill," for example.

As described in detail hereinabove, with the route guiding system according to the present invention, guidance takes place according to a relative positional relationship with respect to the vehicle travel direction of a street near the route, and therefore a pedestrian can intuitively grasp the direction to take along the route, and incorrect route selection can be prevented. Because of this, it is possible for the pedestrian to easily reach the destination without becoming lost.

Also, in the preceding description, the route guiding server is provided with route searching means and a network for route searching, but the present invention is not limited to the aforedescribed configuration; the route guiding server may be provided with a map database and a POI database, and have only the function of a map distribution server for distributing maps of POI locations. In this case, a configuration in which the map database is provided with attribute information of streets and railroads is acceptable.

Also, whereas the preceding description described a case of guiding the travel direction of a moving body which is a pedestrian carrying a terminal device, the present invention is not limited to this. The present invention can be implemented in a case where the moving body is an automobile equipped with a terminal device.

## Claims

1. A route guiding system provided with a route guiding server and a terminal device, the route guiding server being adapted to distribute to the terminal device guidance information in a pre-established route, and the terminal device being adapted to provide the received guidance information to a moving body that moves, wherein the route guiding system is **characterized by** comprising:
reference point establishing means for establishing a reference point as a base point of a travel direction for guidance in a direction to be taken by the moving body on said route;
travel direction determining means for determining a direction to be taken by the moving body from said reference point, on the basis of information relating to said route;
target object selecting means for selecting a predetermined target object from among target objects defining a travel direction of the moving body near said reference point;
attribute information acquiring means for acquiring attribute information relating to a target object selected by said target object selecting means; and
travel direction guiding means for guiding the moving body in a travel direction from said reference point, which direction being determined by said travel direction determining means and defined on the basis of the attribute information acquired by said attribute information acquiring means, during guidance in a direction to be taken by the moving body on the route.

2. The route guiding system according to claim 1, **characterized in that** said target object is a street;
said attribute information is information relating to the classification of the street and the vehicle travel direction; and
during guidance in a direction to be taken by the moving body on a route, said travel direction guiding means guides the moving body in a travel direction from said reference point, which direction being defined by a relative direction with respect to the vehicle travel direction on said street.

3. The route guiding system according to claim 2, **characterized in that** said attribute information includes information indicating whether the vehicle is of a single-lane or multiple-lane type; and information indicating whether two-direction traffic is possible as directions of vehicle travel.

4. The route guiding system according to claim 2 or 3, **characterized in that** said travel direction guiding means employs text for guidance in said vehicle travel direction, and in a travel direction of the moving body that is defined by a relative positional relationship with respect to said vehicle travel direction.

5. The route guiding system according to claim 2 or 3, **characterized in that** said travel direction guiding means employs arrows for guidance in said vehicle travel direction, and in a travel direction of the moving body that is defined by a relative positional relationship with respect to said vehicle travel direction.

6. The route guiding system according to claim 2 or 3, **characterized in that** said travel direction guiding means employs audio for guidance in said vehicle travel direction, and in a travel direction of the moving body that is defined by a relative positional relationship with respect to said vehicle travel direction.

7. The route guiding system according to any of claims 1 to 6, **characterized in that** the direction to be taken by said moving body is a direction defined on the basis of a result of a route search.

8. The route guiding system according to any of claims 1 to 6, **characterized in that** a direction to be taken by said moving body can be established arbitrarily.

9. The route guiding system according to any of claims 1 to 8, **characterized in that** said reference point is a point having exit spot information established for a facility exit on the route.

10. The route guiding system according to any of claims 1 to 8, **characterized in that** said reference point is a point decided to be where a predetermined area on the route is left.

11. The route guiding system according to any of claims 1 to 8, **characterized in that** said reference point is a current position acquired by positioning means.

12. The route guiding system according to any of claims 1 to 8, **characterized in that** said reference point is a position arbitrarily established on a route.

13. A route guiding server in a route guiding system provided with a route guiding server for distributing guidance information in a pre-established route, and a terminal device connected to the route guiding server via a network, and adapted for providing the received guidance information to a moving body that moves, wherein the route guiding server is **characterized by** comprising:
reference point establishing means for establishing a reference point as a base point of a travel direction for guidance in a direction to be taken by the moving body on said route;
travel direction determining means for determining a direction to be taken by the moving body from said reference point, on the basis of information relating to said route;
target object selecting means for selecting a predetermined target object from among target objects defining a travel direction of the moving body near said reference point;
attribute information acquiring means for acquiring attribute information relating to a target object selected by said target object selecting means; and
travel direction guiding means for guiding the moving body in a travel direction from said reference point, which direction being determined by said travel direction determining means and defined on the basis of the attribute information acquired by said attribute information acquiring means, during guidance in a direction to be taken by the moving body on the route.

14. The route guiding server according to claim 13, **characterized in that** said target object is a street;
said attribute information is information relating to the classification of the street and the vehicle travel direction; and
during guidance in a direction to be taken by the moving body on a route, said travel direction guidance means guides the moving body in a travel direction from the reference point, which direction being defined by a relative direction with respect to the vehicle travel direction on the street.

15. The route guiding server according to claim 14, **characterized in that** said attribute information includes information indicating whether the vehicle is of a single-lane or multiple-lane type; and information indicating whether two-direction traffic is possible as directions of vehicle travel.

16. The route guiding server according to claim 14 or 15, **characterized in that** said travel direction guiding means employs text for guidance in said vehicle travel direction, and in a travel direction of the moving body defined by a relative positional relationship with respect to said vehicle travel direction.

17. The route guiding server according to claim 14 or 15, **characterized in that** said travel direction guiding means employs arrows for guidance in said vehicle travel direction, and in a travel direction of the moving body defined by a relative positional relationship with respect to said vehicle travel direction.

18. The route guiding server according to claim 14 or 15, **characterized in that** said travel direction guiding means employs audio for guidance in said vehicle travel direction, and in a travel direction of the moving body defined by a relative positional relationship with respect to said vehicle travel direction.

19. The route guiding server according to any of claims 13 to 18, **characterized in that** the direction to be taken by said moving body is a direction defined on the basis of a result of a route search.

20. The route guiding server according to any of claims 13 to 18, **characterized in that** a direction to be taken by said moving body can be established arbitrarily.

21. The route guiding server according to any of claims 13 to 20, **characterized in that** said reference point is a point having exit spot information established for a facility exit on the route.

22. The route guiding server according to any of claims 13 to 20, **characterized in that** said reference point is a point decided to be where a predetermined area on the route is left.

23. The route guiding server according to any of claims 13 to 20, **characterized in that** said reference point is a current position acquired by positioning means.

24. The route guiding server according to any of claims 13 to 20, **characterized in that** said reference point is a position arbitrarily established on a route.

25. A route guiding method in a route guiding system provided with a route guiding server for distributing guidance information in a pre-established route, and a terminal device connected to the route guiding server via a network, for providing the received guidance information to a moving body that moves, wherein the method is **characterized by** comprising:
establishing a reference point as a base point of a travel direction for guidance in a direction to be taken by the moving body on said route;
determining a direction to be taken by the moving body from said reference point, on the basis of information relating to said route;
selecting a predetermined target object from among target objects defining a travel direction of the moving body near said reference point;
acquiring attribute information relating to a selected target object; and
guiding the moving body in a determined travel direction from said reference point, which direction is specified on the basis of acquired attribute information, during guidance in a direction to be taken by the moving body on the route.

26. The route guiding method according to claim 25, **characterized in that** said target object is a street;
said attribute information is information relating to the classification of the street and the vehicle travel direction; and
during guidance in a direction to be taken by the moving body on a route, said travel direction guiding means guides the moving body in a travel direction from said reference point, which travel direction being defined by a relative direction with respect to the vehicle travel direction on said street.

27. The route guiding method according to claim 26, **characterized in that** said attribute information includes information indicating whether the vehicle is of a single-lane or multiple-lane type; and information indicating whether two-direction traffic is possible as directions of vehicle travel.

28. The route guiding method according to claim 26 or 27, **characterized in that** during guidance of travel direction, text is employed for guidance in said vehicle travel direction, and in a travel direction of the moving body defined by a relative positional relationship with respect to said vehicle travel direction.

29. The route guiding method according to claim 26 or 27, **characterized in that** during guidance of travel direction, arrows are employed for guidance in said vehicle travel direction, and in a travel direction of the moving body defined by a relative positional relationship with respect to said vehicle travel direction.

30. The route guiding method according to claim 26 or 27, **characterized in that** during guidance of travel direction, audio is employed for guidance in said vehicle travel direction, and in a travel direction of the moving body defined by a relative positional relationship with respect to said vehicle travel direction.

31. The route guiding method according to any of claims 25 to 30, **characterized in that**
the direction to be taken by said moving body is a direction defined on the basis of a result of a route search.

32. The route guiding method according to any of claims 25 to 30, **characterized in that** a direction to be taken by said moving body can be established arbitrarily.

33. The route guiding method according to any of claims 25 to 32, **characterized in that** said reference point is a point having exit spot information established for a facility exit on the route.

34. The route guiding method according to any of claims 25 to 32, **characterized in that** said reference point is a point at which a decision is made that a predetermined area on the route has been left.

35. The route guiding method according to any of claims 25 to 32, **characterized in that** said reference point is a current position acquired by positioning means.

36. The route guiding method according to any of claims 25 to 32, **characterized in that** said reference point is a position arbitrarily established on a route.
